# EUROPÄISCHE PATENTSCHRIFT

(11) **EP 2 785 551 B1**
(45) Veröffentlichungstag und Bekanntmachung des Hinweises auf die Patenterteilung: **18.04.2018**
(21) Anmeldenummer: 12799539.7
(22) Anmeldetag: 30.11.2012
(51) Int. Cl.: B60K 7/00, B60B 5/02

(54) **RAD EINES ELEKTROFAHRZEUGS**
WHEEL OF AN ELECTRIC VEHICLE
ROUE D'UN VÉHICULE ÉLECTRIQUE

(30) Priorität: 02.12.2011 DE 202011108560 U
(43) Veröffentlichungstag der Anmeldung: 08.10.2014
(73) Patentinhaber: Fraunhofer-Gesellschaft zur Förderung der angewandten Forschung e.V., 80686 München (DE)
(72) Erfinder: SCHWEIZER, Nicole, 84034 Landshut (DE); GIESSL, Andreas, 37120 Bovenden (DE); SCHWARZHAUPT, Oliver, 60594 Frankfurt (DE); BÜTER, Andreas, 64283 Darmstadt (DE)
(74) Vertreter: Eisenführ Speiser
(86) Internationale Anmeldenummer: PCT/EP2012/074073
(87) Internationale Veröffentlichungsnummer: WO 2013/079653

(56) Entgegenhaltungen:
- EP-A1- 1 380 459
- WO-A1-96/21965
- WO-A1-2004/067295
- WO-A1-2007/141841
- DE-A1- 4 218 888
- DE-A1- 19 548 117
- DE-A1-102010 049 622
- US-A1- 2011 139 523

## Beschreibung

Die vorliegende Erfindung betrifft ein Rad eines Elektrofahrzeugs sowie einen Radkörper eines Rades eines Elektrofahrzeugs. Weiterhin betrifft die vorliegende Erfindung ein Verfahren zum Herstellen eines Radkörpers eines Rades eines Elektrofahrzeugs. Und die Erfindung betrifft ein Elektrofahrzeug.
Elektrofahrzeuge sind hinlänglich bekannt. Sie wurden entwickelt, um Alternativen für Kraftfahrzeuge mit Dieselmotor oder Ottomotor zu finden. Anfänglich bauten Entwicklungen von Elektrofahrzeugen auf bekannten Kraftfahrzeugen auf, wobei zunächst der Verbrennungsmotor durch einen Elektromotor ersetzt wurde und außerdem der Ansatz verfolgt wurde, das Fahrzeug insgesamt sparsamer zu machen. Hierbei wurde insbesondere versucht, Größe und Gewicht des Fahrzeugs zu verkleinern.
Mit zunehmender Entwicklung von Elektrofahrzeugen hat sich dies als eigenständiges technisches Gebiet etabliert, in dem auch Besonderheiten elektrischer Antriebe gegenüber etablierten Antrieben durch Verbrennungsmotoren ausgenutzt werden. Hierzu gehören beispielsweise gute Mess- und Steuermöglichkeiten eines Elektromotors und auch dass Elektromotoren regelmäßig ohne Getriebe auskommen können.
Darüber hinaus eignen sich Elektromotoren für ein Konzept bzw. einen Aufbau eines Kraftfahrzeugs, insbesondere Pkws, bei dem für jedes Rad, insbesondere an jedem Rad ein einzelner Elektromotor vorgesehen ist. In diesem Zusammenhang ist insbesondere auch ein so genannter Radnabenmotor bekannt, bei dem jedes Rad mit einem eigenen Motor in der Felge ausgestattet ist. Dies hat allerdings den Nachteil, dass ein solches Rad eine hohe Masse und im Ergebnis insbesondere ein hohes Trägheitsmoment aufweist. Zudem ist ein in der Felge angeordneter Motor stärkeren Stoßbelastungen ausgesetzt als ein in der Karosserie des Kraftfahrzeugs gelagerter Motor.
Im Übrigen eignen sich Elektromotoren üblicherweise auch für den generatorischen Betrieb. Technisch korrekt wird in diesem Fall von elektrischen Maschinen gesprochen, im Falle eines Elektrofahrzeugs ist aber der motorische Betrieb der mit Abstand überwiegende Betrieb, so dass der Begriff Motor verwendet wird, der aber die Möglichkeit eines generatorischen Betriebs einschließt.

Aus DE195 48 117 ist ein Gattungsbildender Radkörper bekannt. Der vorliegenden Erfindung liegt nun die Aufgabe zugrunde, wenigstens eines der oben genannten Probleme oder Aspekte zu adressieren. Insbesondere soll ein Elektrofahrzeug weiter in seiner Effizienz, Stabilität und/oder Nachhaltigkeit verbessert werden. Zumindest soll eine alternative Lösung vorgeschlagen werden.

Erfindungsgemäß wird ein Radkörper gemäß Anspruch 1 vorgeschlagen. Demnach wird ein Radkörper eines Rades eines Elektrofahrzeugs vorgeschlagen. Der Radkörper ist somit Teil eines Rades und umfasst einen Felgenkörper und einen Motoraufnahmekörper. Der Felgenkörper umfasst einen Felgenabschnitt zum Aufnehmen eines Reifens und der Felgenkörper umfasst einen Speichenabschnitt zum Tragen des Felgenabschnitts auf einem Lager zum drehbaren Lagern des Felgenkörpers auf einer Radachse. Der Speichenabschnitt betrifft somit den Bereich zwischen äußerem Reifenaufnahmebereich und innerem Radachsen- oder Nabenbereich. Der Begriff Speichenabschnitt ist dabei nicht so eng zu verstehen, dass er aus Speichen im klassischen Sinne wie bei einem üblichen Fahrrad zu bilden ist. Die Speichen können vielfältige Gestalt haben und der Speichenabschnitt kann grundsätzlich auch als Scheibe oder Ähnlichem ausgestaltet sein. Jedenfalls stellt er einen Tragabschnitt und damit auch einen Verbindungsabschnitt zwischen dem Felgenabschnitt, der radial außen liegt, und einem Achsaufnahmeabschnitt, der radial innen liegt, her.

Der Motoraufnahmekörper ist vorgesehen zum Aufnehmen eines Elektromotors zum Antreiben des Rades. Der Motoraufnahmekörper umfasst einen äußeren, radial umlaufenden Aufnahmeabschnitt zum Aufnehmen und Befestigen eines äußeren, zur Radachse drehbaren Teils des aufzunehmenden Elektromotors. Insbesondere ist der äußere, radial umlaufende Aufnahmeabschnitt dafür vorgesehen, dass besagter drehbarer Teil des Elektromotors in diesen Aufnahmeabschnitt zumindest teilweise eingesetzt wird.

Weiterhin umfasst der Motoraufnahmekörper einen Übertragungsabschnitt zum Übertragen eines zum Antreiben des Rades auf den Aufnahmeabschnitt wirkenden Drehmoments auf den Speichenabschnitt. Der Motoraufnahmekörper ist somit so gestaltet, dass ein Kraftfluss, nämlich eines durch den Elektromotor erzeugten Antriebsdrehmomentes, vom Elektromotor auf den äußeren, radial umlaufenden Aufnahmeabschnitt übertragen wird und von diesem weiter über den Übertragungsabschnitt übertragen wird, um von diesem dann weiter auf den Speichenabschnitt des Felgenkörpers übertragen zu werden. Insbesondere der Übertragungsabschnitt des Motoraufnahmekörpers ist somit dazu ausgelegt und aufgebaut, ein Drehmoment zu übertragen, also eine in Drehrichtung gerichtete Kraft.
Der Übertragungsabschnitt des Motoraufnahmekörpers ist in einem Verbindungsbereich mit dem Speichenabschnitt des Felgenkörpers verbunden. Insbesondere soll hier, nämlich in diesem Verbindungsbereich das Drehmoment vom Motoraufnahmekörper zum Felgenkörper übertragen werden. Entsprechend ist auch der Verbindungsbereich ausgestaltet, nämlich zum Übertragen einer rotatorischen Kraft.
Weiterhin ist vorgesehen, dass der Motoraufnahmekörper im Bereich des äußeren Aufnahmeabschnitts zum Felgenabschnitt in radialer Richtung beabstandet ist. Es besteht also in diesem Bereich kein direkter Kontakt zwischen Motoraufnahmekörper und Felgenabschnitt und somit wird insbesondere auch verhindert, dass eine radiale oder laterale Kraft, nämlich insbesondere eine Stoßkraft, die beim Fahren des Fahrzeugs entsteht, direkt auf den Motoraufnahmekörper insbesondere den Aufnahmeabschnitt und damit auf den Motor übertragen wird. Es ist somit eine Entkopplung der Kraftflüsse vorgesehen, nämlich einerseits die Übertragung des Antriebsdrehmomentes und andererseits insbesondere unerwünschte Kraftstöße, die von der Straße auf die Felge wirken. Gemäss Erfindung ist der Felgenkörper und der Motoraufnahmekörper im Wesentlichen aus einem Faser-Kunststoff-Verbund hergestellt, bzw. bestehen daraus. Sie können jeweils vollständig aus einem Faser-Kunststoff-Verbund bestehen, oder es können Fremdmaterialien in geringem Umfang vorhanden sein, wie Beschlagselemente zum Verbinden und/oder eingearbeitete Elemente wie verstärkende Schaumelemente, oder Beschichtungen wie Lack, um nur einige Beispiele zu nennen. Jedenfalls wird gemäß Erfindung vorgeschlagen, dass Form, Stabilität, Gewicht und/oder Struktur durch den Faser-Kunststoff-Verbund bestimmt wird bzw. werden.
Gemäß einer Ausführungsform weist der Aufnahmeabschnitt des Motoraufnahmekörpers einen kleineren Außendurchmesser auf als der Verbindungsbereich, in dem der Übertragungsabschnitt des Motoraufnahmekörpers mit dem Speichenabschnitt des Felgenkörpers verbunden ist. Soweit der Aufnahmeabschnitt und/oder der Verbindungsbereich nicht ohnehin zylindrisch ausgestaltet sind, ist unter dem Außendurchmesser jeweils ein mittlerer Außendurchmesser beispielsweise im arithmetischen Sinne zu verstehen. Alternativ ist zumindest der größte Außendurchmesser des Aufnahmeabschnitts größer als der kleinste Außendurchmesser des Verbindungsbereichs, insbesondere um wenigstens 30%, vorzugsweise wenigstens 50%, insbesondere wenigstens 80%.
Hierdurch soll insbesondere eine Trennung der Kraftflüsse erreicht werden, nämlich der Drehmomentenübertragung des Antriebsdrehmomentes einerseits und der Übertragung von Stoßkräften auf die Felge andererseits. Durch den kleinen Außendurchmesser des Verbindungsbereichs muss somit ein auf den Aufnahmeabschnitt wirkendes Drehmoment zunächst über den Übertragungsabschnitt nach innen zum Verbindungsbereich übertragen werden, um dann von dort über den Speichenabschnitt nach außen zum Felgenabschnitt übertragen werden. Dahingegen nimmt eine Stoßbelastung einen entsprechenden umgekehrten Weg nicht bzw. nur zu einem Teil, weil sie aufgrund ihrer radialen oder lateralen Richtung im Wesentlichen nach innen und nicht oder weniger wieder von dem Verbindungsbereich nach außen geleitet wird bzw. fließt. Hierdurch ergibt sich eine gute Drehmomentübertragung von dem Elektromotor auf die Felge und damit am Ende auf den Reifen, wohingegen der Elektromotor gleichzeitig gegen Stöße geschützt ist.
Die Verwendung von Faser-Kunststoff-Verbindungen schafft ein leichtgewichtiges Rad bzw. einen leichtgewichtigen Radkörper, in dem ein Elektromotor integrierbar und gegen straßenbedingte Stoßbelastungen geschützt ist. Darüber hinaus wird vorgeschlagen, den Faser-Kunststoff-Verbund so auszugestalten, insbesondere die Fasern so zu legen, dass die Übertragung eines Drehmomentes jedenfalls im Aufnahmeabschnitt und dem Übertragungsabschnitt des Motoraufnahmekörpers begünstigt wird und die Übertragung einer radialen oder lateralen stoßartigen Kraftübertragung vermieden wird.
Vorzugsweise erfolgt der Aufbau des Radkörpers so, dass stoßartige Kräfte oder Bewegungen bedämpft werden. Auch eine solche Bedämpfung kann durch entsprechende Anordnung der Fasern bzw. Fasergelege erfolgen als auch ergänzend oder alternativ durch das Vorsehen zusätzlicher Materialien wie beispielsweise insoweit dämpfender Schaumstoffe. Solche dämpfenden Schaumstoffe oder andere ähnlich wirkende Materialien können in den Faser-Kunststoff-Verbund eingearbeitet werden, indem sie beispielsweise zwischen mehreren Faserlagen angeordnet werden. Gemäss Erfindung ist der Motoraufnahmekörper im Bereich des äußeren Aufnahmeabschnitts zum Speichenabschnitt in axialer Richtung beabstandet. Somit wird verhindert, dass insbesondere Stoßkräfte vom Speichenabschnitt unmittelbar auf den Aufnahmeabschnitt übertragen werden. Insbesondere ist der Motoraufnahmekörper im Bereich des Aufnahmeabschnitts sowohl in radialer Richtung zum Felgenabschnitt beabstandet als auch in axialer Richtung zum Speichenabschnitt beabstandet und damit in diesem Bereich vom Felgenkörper getrennt. Eine Verbindung zum Felgenkörper ist nur in einem inneren Bereich nahe der Radachse über den Verbindungsbereich vom Motoraufnahmekörper zum Felgenkörper vorgesehen. Günstig ist es, wenn der Radkörper so ausgebildet ist, dass ein zum Antreiben des Rades auf den äußeren Aufnahmeabschnitt wirkendes Drehmoment vom äußeren Aufnahmeabschnitt des Motoraufnahmekörpers über den inneren Übertragungsabschnitt des Motoraufnahmekörpers und Verbindungsbereich und den Tragabschnitt des Feigenkörpers auf den Felgenabschnitt des Felgenkörpers übertragen wird, wobei eine radial auf den Felgenkörper wirkende Kraft über den Speichenabschnitt auf das Lager übertragen wird.
Gemäß einer Ausgestaltung wird vorgeschlagen, dass in dem Felgenkörper in einem Übergangsbereich zwischen Felgenabschnitt und Speichenabschnitt Schaumkörper zum Erhöhen der Stabilität und/oder der Biegesteifigkeit des Radkörpers eingearbeitet sind. Insbesondere sind solche Schaumkörper jeweils zwischen zwei Faserlagen eines Faser-Kunststoff-Verbundes angeordnet. Insbesondere kann der Felgenkörper im Übergangsbereich zwischen Felgenabschnitt und Speichenabschnitt als umlaufender Winkel bzw. im Querschnitt etwa L-förmig ausgebildet sein. Gerade in diesem winkligen Bereich können hohe Belastungskräfte auftreten, so dass hier diese Verstärkung vorgeschlagen wird. Hierbei kann der Schaumkörper jeweils auch einfach dazu führen, dass der Felgenkörper in dem kritischen Bereich eine sehr hohe Dicke erhält, ohne dass dieser auf der gesamten Dicke mit dem Faser-Kunststoff-Verbund versehen sein muss.
Durch die Verwendung von Faser-Kunststoff-Verbunden (FKV) ergibt sich durch die hohen spezifischen Festigkeiten und hohen spezifischen Steifigkeiten ein hohes Leichtbaupotenzial. Durch entsprechende Konstruktion ermöglicht der Einsatz von FKV höhere Strukturdämpfungen, höhere Schadenstoleranzen und höhere Bruchdehnungen im Vergleich zu Metall. Ein weiterer Vorteil dieser Leichtbauweise in FKV ist die Möglichkeit der Funktionsintegration. Gemäss Erfimdung ist der Radkörper ganz oder teilweise aus Faserverbundwerkstoff bestehen. Vorzugsweise ist ein Elektromotor integriert und/oder es sind Sensoren integriert.

Gemäß Erfindung wird vorgeschlagen, dass in den Radkörper wenigstens ein nachgiebiger Abschnitt, insbesondere elastischer und dämpfender Abschnitt zum Aufnehmen von Stoßbelastungen eingearbeitet ist, wobei der wenigstens eine nachgiebige Abschnitt als aktiver Abschnitt ausgebildet ist. Unter nachgiebig ist hier insbesondere nicht starr zu verstehen, so dass insbesondere eine Stoßbelastung teilweise in dem wenigstens einen nachgiebigen Abschnitt aufgenommen wird. Der Abschnitt ist vorzugsweise elastisch in dem Sinne, dass er nach Aufnahme einer Stoßbelastung wieder in seine ursprüngliche Form zurückkehrt. Eine solche Rückkehr kann im Sinne eines Zurückfederns erfolgen, sollte vorzugsweise aber bedämpft sein, so dass eine Stoßbelastung absorbiert wird, ohne zu einer federnden Schwingung zu führen.

Als ein aktiver Abschnitt als nachgiebiger elastischer und dämpfender Abschnitt kann eine Piezokeramik vorgesehen sein, die bei einer Kompression an elektrischen Anschlüssen eine elektrische Spannung abgibt und umgekehrt bei Anlegen einer Spannung zu einer entsprechenden Bewegung führt, wodurch eine elastische Bewegung steuerbar ist. Andere aktive nachgiebige Abschnitte können beispielsweise Schwingungstilger sein, oder ein aktives Interface. Außerdem kommt ein Flüssigkeitsdämpfer in Betracht.

Unter einem Schwingungstilger wird hier eine an das zu bedämpfende Bauteil mittels Federn und mittels eines Dämpfungselements angekoppelte Zusatzmasse verstanden. Wirkt auf das Hauptsystem eine harmonische Kraft, reagiert das Gesamtsystem nach einer kurzen Einschwingphase harmonisch und es schwingt stationär mit der Erregerfrequenz. Ein aktives Interface, das auch als aktives Lager mit paralleler Krafteinleitung bezeichnet werden kann, verwendet eine Aktorik, die von einer statischen Belastung entkoppelt ist.

Flüssigkeitsdämpfer und/oder Reibungsdämpfer werden gemäß einer weiteren Ausgestaltung zur Schwingungsreduktion vorgeschlagen, nämlich insbesondere in Bereichen zwischen Radkörper und Motoraufnahmekörper. Oftmals ist der Flüssigkeitsdämpfer dem Reibungsdämpfer vorzuziehen ist, weil eine meistens etwa konstante Reibkraft zu Verzögerungskräften einer Feder addieren und sich von ihren Beschleunigungskräften subtrahieren und somit die harmonische Schwingbewegung verzerrt und zu Beschleunigungs-überhöhungen führen kann. Vorzugsweise wird die Dämpfung der Schwingungen allein durch Flüssigkeitsdämpfer mit geschwindigkeitsabhängiger Dämpfkraft zu erreicht.

Weitere grundsätzliche Aspekte und Erläuterungen zu den genannten Dämpfermitteln können Fachbüchern entnommen werden.

Erfindungsgemäß wird zudem ein Rad mit einem Radkörper gemäß einer der obigen Ausführungsformen vorgeschlagen, das eine Radachse und ein Radlager aufweist. Die Radachse ist vorgesehen zum Befestigen am Elektrofahrzeug und das Radlager ist vorgesehen zum Anordnen auf der Drehachse, um dadurch auf dem Radlager den Felgenkörper auf der Radachse drehbar zu lagern. Weiterhin ist ein Elektromotor mit einem rotierenden Teil und einem stehenden Teil vorgesehen, die drehbar zueinander gelagert sind. Der stehende Teil ist fest mit der Radachse verbunden und der drehende Teil ist fest mit dem Aufnahmeabschnitt des Motoraufnahmekörpers verbunden. Der Elektromotor kann somit auf den Aufnahmeabschnitt ein Drehmoment ausüben, das weiter zum Speichenabschnitt zum Antreiben des Rades übertragen wird.

Somit wird ein funktionstüchtiges Rad eines Elektrofahrzeugs geschaffen, das den Elektromotor mitaufweist. Es kann über die Radachse am Fahrzeug befestigt werden und über den Motor angesteuert werden, um das Kraftfahrzeug zu bewegen und gegebenenfalls auch beim Bremsen elektrische Energie wieder aufzunehmen. Durch die Verwendung des Radkörpers wird eine leichte Bauweise geschaffen, wobei außerdem durch den Radkörper eine Entkopplung von Kraftströmen erfolgt, nämlich so, dass ein von dem Elektromotor ausgeübtes Drehmoment über den Aufnahmeabschnitt, den Übertragungsabschnitt, den Verbindungsbereich, den Speichenabschnitt auf den Felgenabschnitt übertragen wird, der dieses Drehmoment weiter auf einen aufgezogenen Reifen übertragen kann. Stoßbelastungen werden, über einen Reifen kommend, auf den Felgenabschnitt und von dort weiter über den Speichenabschnitt auf das Radlager übertragen und nicht oder in geringem Umfang nur auf den Elektromotor übertragen. Mit solchen Rädern kann ein Elektrofahrzeug insbesondere so ausgestaltet werden, dass jedes Rad, insbesondere jedes der vier Räder so ausgestaltet ist, nämlich jedes Rad einen Elektromotor aufweist. Vorzugsweise wird vorgeschlagen, auch ein Reserverad mit Elektromotor vorzusehen.

Vorzugsweise wird als Elektromotor ein Synchronmotor vorgeschlagen, wobei der drehende Teil Permanentmagneten aufweist. Hierdurch wird eine elektrische Ansteuerung des drehenden Teils vermieden und damit ein etwaiges Problem einer Stromversorgung zu diesem drehenden Teil und damit etwaige Schleifringkörper ebenfalls vermieden. Das stehende Teil kann insbesondere als Stator im elektrotechnischen Sinne ausgestaltet sein und ein Drehfeld bereitstellen, um hierdurch die Permanentmagneten und damit den Radkörper und damit im Ergebnis das Rad anzutreiben.

Vorzugsweise ist der drehende Teil ganz oder teilweise in den Motoraufnahmeabschnitt eingearbeitet. Dies kann insbesondere die Permanentmagneten betreffen, soweit diese Variante gewählt wird, die hierbei vorzugsweise in Faser-Kunststoff-Verbund eingearbeitet sind. Der Motoraufnahmeabschnitt kann hierbei als Teil des Elektromotors, nämlich als tragender Rahmen des drehenden Teils des Elektromotors fungieren. Hierdurch kann in einer gesamtheitlichen Herstellung ein Teil des Elektromotors mit in den Faser-Kunststoff-Verbund aufgenommen werden. Insbesondere kann die Art und Weise des Aufbaus des Faser-Kunststoff-Verbundes, insbesondere die Art und Ausrichtung der Faserrichtungen auf die aufzunehmenden Kräfte, nämlich insbesondere auf die aufzunehmenden Drehmomente angepasst werden.

Vorzugsweise wird der Elektromotor so integriert, dass seine wesentlichen Bestandteile wie Permanentmagnete und/oder gegebenenfalls Elektromagnete direkt in die Faserverbundstruktur integriert sind.

Der Motoraufnahmekörper, der auch als Motorglocke bezeichnet werden kann, ist vorzugsweise so ausgeführt, dass eine hohe spezifische Festigkeit des Faserverbundes hohe Eigenfrequenzen bei höherer Eigendämpfung bzw. geringe Schallabstrahlung erzeugt, bzw. dass die Eigenfrequenz der Motorglocke so hoch liegt, dass diese nicht unerwünscht angeregt werden kann, insbesondere nicht in einer Weise angeregt werden kann, dass laute Geräusche dadurch entstehen.

Eine Möglichkeit für hohe oder noch höhere Eigenfrequenzen ist die Verwendung von hochmoduligen Fasern, die üblicherweise auch als HM abgekürzt werden und durch die besonders hohen Eigenfrequenzen bei hoher Eigendämpfung erzielt werden können.

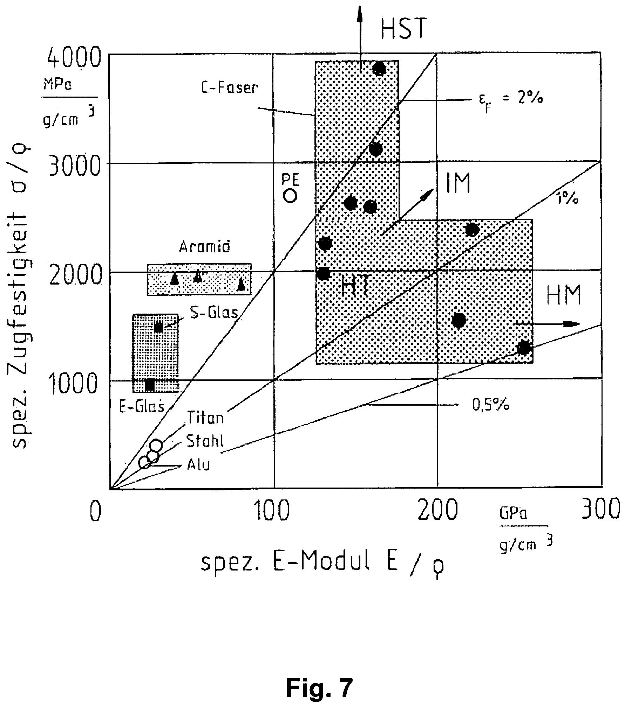

Die Auswahl der Materialien sollte anhand der Fig. 7 (Michaeli/Wegener; Einführung in die Technologie der Faserverbundwerkstoffe; München Wien; Hanser Verlag 1989) erfolgen, wobei vorzugsweise Materialien aus den schraffierten Bereichen genommen werden, insbesondere der etwa L-förmig dargestellte schraffierte Bereich. Dieser weist Bereiche aus, die eine praktikable Kombination der spezifischen Zugfestigkeit, bezogen auf die Dichte des spezifischen Elastizitätsmoduls bezogen auf die Dichte aufweisen. Darin werden die folgenden Abkürzungen verwendet, deren englische Bezeichnung auch in nicht englischsprachigen Ländern wie Deutschland für den Fachmann gebräuchlich ist, so dass auch die englische Bezeichnung mit aufgeführt ist, die zudem den Ursprung der Abkürzungen darstellt:
HM = high modulus, hochmoduliger Fasertyp
HST = high strain to failure, hochdehnbarer Fasertyp
IM = intermediate modulus, hochfester Fasertyp mit hohem E-Modul
HT = high tensity, hochfester Fasertyp

Der hochfeste Fasertyp HT ist im Vergleich zu den hochmoduligen Fasern, die nämlich bei hohen Temperaturen geglühten sind, preisgünstig. Als ein guter, für die vorliegende Erfindung praktikabler Kompromiss, wird gemäß einer Ausführungsform die Verwendung der IM-Faser vorgeschlagen, eine höhere Steifigkeit und ein höheres Dehnvermögen als die HT-Faser besitzt, aber meist deutlich preiswerter als die hochmodulige Faser HM ist. Diese Ausführungsform berücksichtigt gute mech. Eigenschaften unter Berücksichtigung verwendbarer Beschaffungsgrößen.

Vorzugsweise wird vorgeschlagen, dass Wicklungen des Elektromotors aus Kohlenstofffasern bestehen und/oder solche aufweisen, die vorzugsweise in die Wicklungen eingearbeitet sind, insbesondere so, dass die Wicklungen in den Faserverbundwerkstoff einlaminiert sind. Insbesondere wird vorgeschlagen, dass die Kohlenstofffasern Teil eines Läufers einer Asynchronmaschine bilden, insbesondere ganz oder teilweise einen Käfigläufer bilden. Hierdurch kann eine vorteilhafte Integration des Motors in die verwendeten Materialien, insbesondere den Faser-Kunststoff-Verbund erreicht werden. Vorzugsweise wird eine geeignete Stromaufnahme durch einen geeigneten Durchmesser des Motors ermöglicht und/oder es werden Teile des Motors, insbesondere des Läufers parallelgeschaltet, um eine entsprechende Stromaufnahme zu erreichen.

Gemäß einer weiteren Ausgestaltung wird vorgeschlagen, Magnete in den Kunststoff mit einzubringen. Diese Magnete können beispielsweise zusammengeklebt oder durch einen Ring in eine ringförmige Struktur gehalten werden. Für die Fixierung der Magnete zum Magnetring gibt es weitere Möglichkeiten. Dazu gehört, dass der Magnetring in den Faserverbund ein oder einlaminiert wird, oder dass er dort umgossen wird.

Gemäß einer noch weiteren Ausführungsform wird vorgeschlagen, Magnetpulver in Harz in eine gewünschte Form, insbesondere in Ringform zu gießen, und die so gebildete Form in den Faserverbund zu integrieren. Auch das kann bspw. durch Kleben, Umgießen oder Einlaminieren vorgenommen werden. Insbesondere wird das Magnetpulver hierzu mit dem Harz gemischt und die entstandene Dispersion in die gewünschte Form gegossen.

Insbesondere ist das Rad mit dem Elektromotor so ausgestaltet, dass nur das Antriebsmoment übertragen wird, der Elektromotor ansonsten aber nicht im radialen und lateralen Kraftschluss sich befindet bzw. dieser im Bereich des Elektromotors vernachlässigt werden kann. Vorzugsweise wird der Elektromotor durch vorgesehene strukturelle Elastizitäten, die unter anderem oben bereits beschrieben wurden, so entkoppelt wird, dass keine Stöße auf ihn übertragen werden bzw. solche Stöße vernachlässigbar oder zumindest unschädlich für den Elektromotor sind. Somit wird eine Stoßentkopplung erreicht.

Solche strukturellen Elastizitäten können auch durch faserverstärkte Kunststoffe insbesondere die Art und Weise ihrer Anordnung realisiert werden. Eine Möglichkeit solcher strukturellen Elastizitäten besteht durch die Wahl einer entsprechenden Formgebung, wie oben bereits beschrieben wurde. Eine solche Formgebung ist als strukturelle Elastizität im passiven Sinne zu verstehen, wobei beispielsweise durch Verwendung integrierter Aktuatoren wie z.B. piezokeramische Aktuatoren oder andere elektrische Aktuatoren eine aktive Elastizität zu realisieren vorgeschlagen wird. Auf die Elastizität, in Art und Amplitude und damit einschließlich Art und Amplitude ihrer Dämpfung kann dann regelungstechnisch durch aktive Ansteuerung eingegriffen werden.

Weiterhin wird erfindungsgemäß ein Elektrofahrzeug mit wenigstens einem der oben beschriebenen Räder, insbesondere mit vier solcher oben beschriebenen Räder vorgeschlagen. Mit anderen Worten wird vorgeschlagen, das Elektrofahrzeug so auszubilden, dass jedes Rad ein erfindungsgemäßes ist und einen Elektromotor aufweist. Natürlich kann nicht nur ein Fahrzeug wie ein Personenkraftwagen mit vier Rädern oder noch mehr Rädern mit den erfindungsgemäßen Rädern mit Elektromotor ausgestattet werden, sondern solche Räder eignen sich auch für die Verwendung eines Elektrozweirades oder Elektrodreirades.

Nachfolgend wird die Erfindung exemplarisch anhand von Ausführungsbeispielen unter Bezugnahme auf die begleitenden Figuren näher erläutert.
- Fig. 1: zeigt schematisch in einer Seiten- bzw. Schnittansicht ein erfindungsgemäßes Rad.
- Fig. 2: zeigt in einer perspektivischen Schnittansicht ein erfindungsgemäßes Rad gemäß einer weiteren Ausführungsform.
- Fig. 3: zeigt schematisch in einer seitlichen Schnittansicht einen erfindungsgemäßen Radkörper gemäß einer Ausführungsform.
- Fig. 4: zeigt schematisch eine Ringstruktur mit unterschiedlichen Querschnitten für unterschiedliche Dämpfungseigenschaften zur Veranschaulichung.
- Fig. 5: zeigt schematisch eine Ringstruktur für eine Ausführungsform eines Radkörpers mit schematisch dargestellten aktiven Dämpfungselementen.
- Fig. 6: zeigt schematisch ein Stadium der Herstellung eines Radkörpers.
- Fig. 7: zeigt ein Diagramm für eine Auswahl an Materialien.

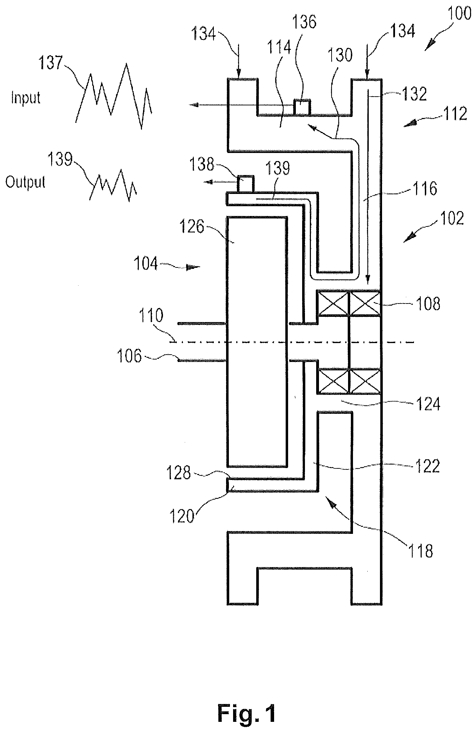

Fig. 1 zeigt ein erfindungsgemäßes Rad 100 mit einem Radkörper 102, einem Elektromotor 104, einer Radachse 106 und einem Radlager 108. Eine Drehachse 110, um die sich die drehbaren Bereiche des Rades 109 drehen, ist ebenfalls dargestellt. Die Darstellung der Fig. 1 entspricht einer seitlichen Schnittansicht, wobei geschnittene Bereiche nicht schraffiert dargestellt sind und im Übrigen ein Teil des Motors 104 nicht geschnitten ist.
Der Radkörper 102 umfasst einen Felgenkörper 112 mit einem Felgenabschnitt 114 und einem Speichenabschnitt 116. Weiterhin ist ein Motoraufnahmekörper 118 vorgesehen, der einen äußeren, radial umlaufenden Aufnahmeabschnitt 120 und einen Übertragungsabschnitt 122 aufweist. Über einen Verbindungsbereich 124 ist der Übertragungsabschnitt 122 mit dem Speichenabschnitt 116 verbunden. Damit ist der Motoraufnahmekörper 118 über den Verbindungsbereich 124 mit dem Felgenkörper 112 verbunden.

Der Elektromotor 104 weist einen stehenden Teil 126 und einen drehenden Teil 128 auf, der in den Aufnahmeabschnitt 120 eingearbeitet ist. Der stehende Teil 126 ist fest auf der Radachse 106 montiert. Der Radkörper 102 ist über das Radlager 108 drehbar auf der Radachse 106 befestigt. Somit ist der Radkörper einschließlich Felgenabschnitt 114 des Felgenkörpers 112 und einschließlich Aufnahmeabschnitt 120 mit eingearbeitetem drehenden Teil 128 des Elektromotors 104 drehbar um die Drehachse 110 angeordnet. Eine Drehbewegung wird hierbei durch den stehenden Teil 126 des Elektromotors 104 auf den drehenden Teil 126 des Elektromotors 104 initiiert. Hierbei entsteht ein Drehmoment, das von dem Aufnahmeabschnitt 120 über den Übertragungsabschnitt 122, den Verbindungsbereich 124, den Speichenabschnitt 116 auf den Felgenabschnitt 114 übertragen wird. Ein ebenfalls notwendiger Reifen, der im Betrieb auf den Felgenabschnitt 114 aufgezogen wäre, wird hier der Übersichtlichkeit halber nicht dargestellt. Der Kraftfluss dieses vom Elektromotor 104 auf den Felgenabschnitt 114 übertragenen Drehmomentes ist mit dem Kraftflussteil für das Drehmoment 130 veranschaulicht. Ein Kraftfluss für etwaige Stöße ist veranschaulicht durch den Kraftflusspfeil für radiale oder laterale Kräfte 132. Der Kraftfluss einer radial oder lateral wirkenden Stoßkraft wirkt somit vom Felgenabschnitt 114 über den Speichenabschnitt 116 auf das Radlager 108.

Zur Überprüfung und in der Darstellung zur Veranschaulichung gezeigt wurden Stoßkräfte gemäß der beiden Stoßpfeile 134 auf den Felgenabschnitt 114 ausgeübt. Diese wurden am Felgensensor 136 gemessen und sind in der Fig. 1 als "Input" 137 veranschaulicht. Die resultierende Stoßkraft wurde zudem mit einem Aufnahmeabschnittssensor 138 im Bereich des Aufnahmeabschnitts 120 und damit im Bereich des drehenden Teils 128 des Elektromotors 104 gemessen. Das Messergebnis ist hier als "Output" 139 veranschaulichend mit einer gegenüber dem Signal "Input" geringeren Amplitude veranschaulicht. Eine Stoßkraft wird somit, wenn sie radial auf den Felgenabschnitt 114 wirkt, allenfalls teilweise auf den Aufnahmeabschnitt 120 übertragen.

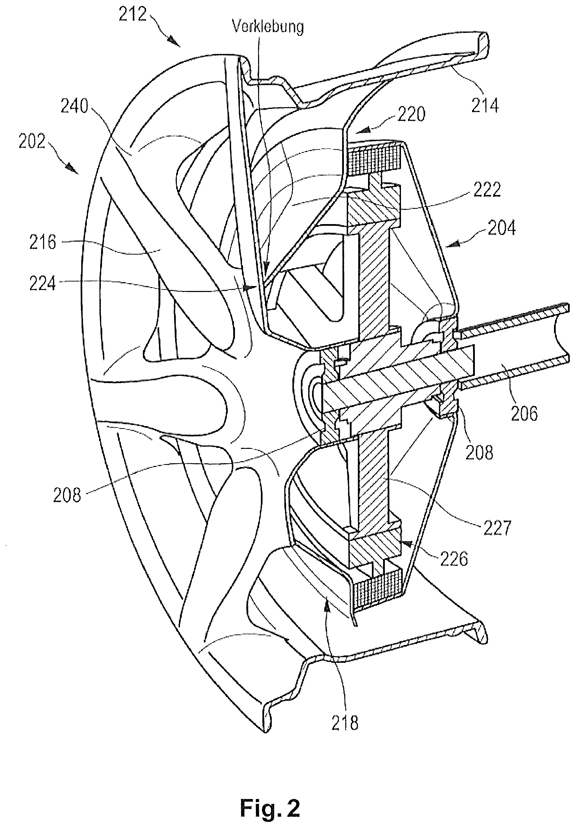

Fig. 2 zeigt eine weitere Ausführungsform eines erfindungsgemäßen Rades 200 in einer perspektivischen Schnittansicht, wobei auch hier geschnittene Flächen nicht schraffiert dargestellt sind. Der Aufbau dieses Rades 200 ist ganz ähnlich zu dem schematisch dargestellten Aufbau des Rades 100 der Fig. 1. Entsprechend weist das Rad 200 der Fig. 2 einen Radkörper 202, einen Elektromotor 204, eine Radachse 206 und zwei Radlager 208 auf der Radachse 206 auf.

Der Radkörper 202 umfasst einen Felgenkörper 212 mit einem Felgenabschnitt 214 und einem Speichenabschnitt 216.

Weiterhin umfasst der Radkörper 202 einen Motoraufnahmekörper 218 mit einem Aufnahmeabschnitt 220 und einem Übertragungsabschnitt 222. Der Übertragungsabschnitt 222 ist in einem Verbindungsbereich 224 durch eine Verklebung mit dem Speichenabschnitt 216 verbunden. Bei dieser Ausgestaltung ist somit der Verbindungsbereich 224 im Wesentlichen durch diese Verklebungsstelle ausgebildet und weist hierbei nur eine geringe axiale Ausrichtung auf, aber eine wenn auch kleine radiale Ausrichtung. Auch hier ist der Verbindungsbereich 224 mit einem deutlich geringeren Außendurchmesser ausgestaltet als der Aufnahmeabschnitt 220.

Der Elektromotor 204 weist einen stehenden Teil 226 und einen drehenden Teil 228 auf. Der drehende Teil 228 ist mit dem Aufnahmeabschnitt 220 fest verbunden. Der stehende Teil 226 ist über Motorspeichen 227 fest an der Drehachse 206 befestigt. Der stehende Teil 226 ist somit dazu vorgesehen, bei entsprechender Ansteuerung ein Drehmoment auf den drehenden Teil 228 auszuüben. Ein hierbei entstehendes Antriebsmoment wird dann weiter über den Übertragungsabschnitt 222, den Verbindungsbereich 224 auf den Speichenabschnitt 216 und von dort weiter schließlich bis zum Felgenabschnitt 214 übertragen. Etwaige Stoßbelastungen auf den Felgenabschnitt 214 führen hingegen im Wesentlichen zu einer über den Speichenabschnitt 216 wirkenden Stoß auf wenigstens eines der Radlager 208.

Eine Erhöhung der Festigkeit des Radkörpers 202, insbesondere des Felgenkörpers 212 kann beispielsweise durch eingearbeitete Schaumelemente im Bereich eines Übergangsbereichs 240 vom Felgenabschnitt 214 auf den Speichenabschnitt 216 vorgesehen sein.

Der Radkörper 202 ist hier im Wesentlichen als Faser-Kunststoff-Verbund ausgebildet, wobei der Felgenkörper 212 einstückig mit dem Felgenabschnitt 214 und dem Speichenabschnitt 216 hergestellt ist und mit dem für sich ebenfalls einstückig hergestellten Motoraufnahmekörper 218 mit dem Aufnahmeabschnitt 220 und dem Übertragungsabschnitt 222 durch Verklebung im Bereich des Verbindungsbereiches 224 fest verbunden. Hier ist eine einfache Herstellung möglich, indem die im Wesentlichen voneinander entkoppelten Körper des Felgenkörpers und des Motoraufnahmekörpers einzeln hergestellt und dann wie dargestellt zu einem Radkörper 202 verklebt werden können.

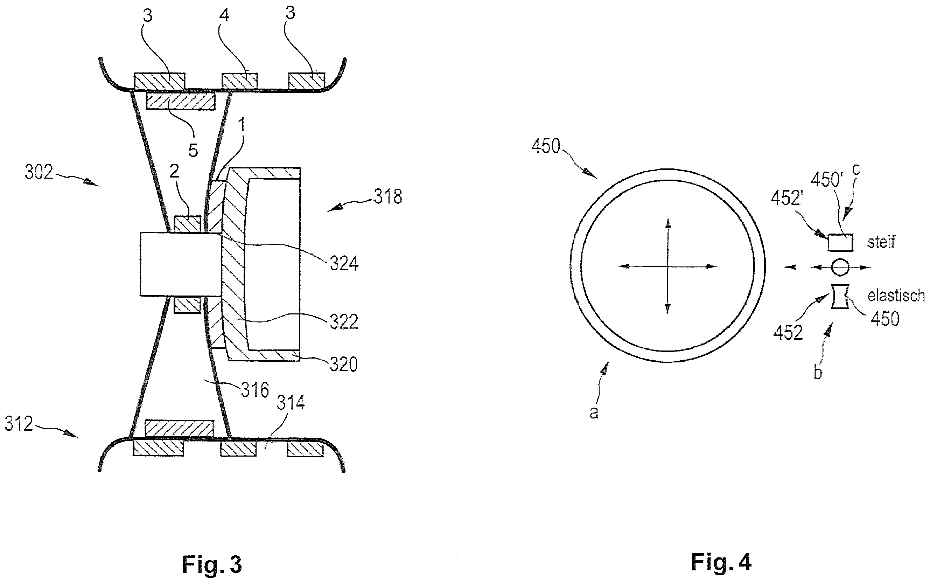

Fig. 3 veranschaulicht in seiner schematischen seitlichen Schnittansicht eines Radkörpers 302 gemäß einer Ausführungsform vorgeschlagene Maßnahmen und Bereiche zur Stoßreduktion. Solche relevanten Bereiche sind in dieser Fig. 3 schraffiert dargestellt, wohingegen tatsächliche Schnittflächen in dieser schematischen Darstellung nicht schraffiert dargestellt sind. Schematische Flächen, die von links unten nach rechts oben schraffiert sind, veranschaulichen Bereiche, in denen Stöße reduziert werden, insbesondere auch im Ergebnis Stöße im Fahrzeug reduziert werden. Bereiche, die entgegengesetzt schraffiert sind, also von links oben nach rechts unten, veranschaulichen Bereiche, in denen Stöße zum Elektromotor hin isoliert werden bzw. die zu einer Isolierung des Elektromotors hinsichtlich radialen Stößen wirken.

Hierzu zeigt Fig. 3 den Radkörper 302 mit dem Felgenkörper 312 und dem Motoraufnahmekörper 318. Es wird darauf hingewiesen, dass die Darstellung in Fig. 3 im Grunde spiegelverkehrt zur Darstellung in der Fig. 1 ist. Auch in der Fig. 3 weist der Felgenkörper 312 einen Felgenabschnitt 314 und einen Speichenabschnitt 316 auf. Der Motoraufnahmekörper 318 umfasst einen Aufnahmeabschnitt 320 und einen Übertragungsabschnitt 322.

Für die Reduktion von Stößen weist der Felgenkörper 312 in seinem Felgenabschnitt 314 die dargestellten Bereiche 3 und 4 zur Reduktion von Stößen auf und der Speichenabschnitt 316 weist hierzu die beiden Bereiche 2 und 5 auf. So können im Bereich 5, der auch als Übergangsbereich zwischen dem Felgenabschnitt und dem Speichenabschnitt bezeichnet werden kann, eingearbeitete Schaumstoffbereiche in dem Faser-Kunststoff-Verbund vorgesehen sein. Die Bereiche 1 bis 5 sind besonders relevante Bereiche zum Abfangen und/oder Dämpfen von Stößen. Diese können durch entsprechende Ausgestaltung der Faserlagen beeinflusst und/oder speziell ausgestaltet werden. In diesen Bereichen können vorzugsweise Dämpfer vorgesehen werden.

Zur Isolierung von Stößen ist der Bereich 1 dargestellt. Tatsächlich bezeichnet dieser Bereich 1 einen Zwischenraum zwischen dem Aufnahmeabschnitt 322 und dem Speichenabschnitt 316. Diese beiden Abschnitte sind dort getrennt und im Grunde nur über den Verbindungsbereich 324 miteinander verbunden. Somit werden zum einen Stöße im Felgenkörper reduziert und zum anderen bzw. zusätzlich im Felgenkörper 312 auftretende Stöße im Wesentlichen davon abgehalten, auf den Motoraufnahmekörper 318 und damit auf den Motor überzugehen. Es wird vorgeschlagen, im Bereich 1 Flüssigkeitsdämpfer und/oder Reibungsdämpfer anzuordnen.

Fig. 4 ist eine sehr schematische Darstellung eines Kreisrings 450, der beispielsweise einen Felgenkörper, Felgenabschnitt oder Speichenabschnitt oder Teil davon darstellen könnte, insbesondere einen Übergang vom Felgenabschnitt zum Speichenabschnitt. Dieser exemplarische Kreisring 450 kann als Elastomerdämpfer angesehen werden bzw. einen solchen beinhalten. Demnach sieht er eine Dämpfung über Material und Form vor. Die Ansicht b zeigt einen Schnitt durch den Kreisring 450. Dieser Schnitt zeigt zwei konkave Seiten 452. Stöße, die gemäß der dargestellten Ansicht b von oben bzw. unten auf diesen Kreisring 450 einwirken, können aufgrund der konkaven Seite aufgenommen bzw. abgefedert werden.

Zur Veranschaulichung ist in der Ansicht c ein veränderter Kreisring 450' mit gerader Seite 452' dargestellt. Aufgrund der geraden Ausgestaltung der Seitenfläche 452' kann diese einem von oben bzw. unten wirkenden Stoß kaum nachgeben. Die in der Ansicht c dargestellte Variante ist somit im Wesentlichen steif.

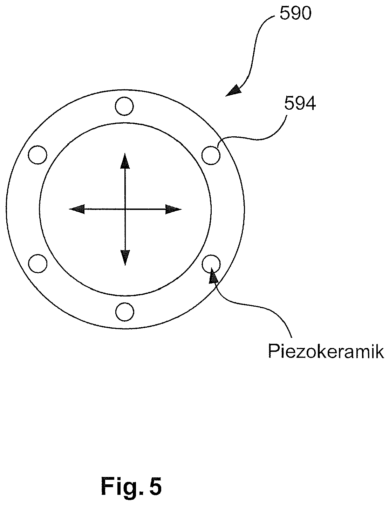

Fig. 5 veranschaulicht ebenfalls zunächst ganz allgemein einen Kreisring 550, der einen ähnlichen Einsatz finden kann wie zu Fig. 4 zu dem Kreisring 450 beschrieben wurde. Für diesen Kreisring 550 und im Übrigen auch für den Kreisring 450 der Fig. 4 kommt grundsätzlich auch eine Anwendung für den Motoraufnahmekörper in Betracht, wobei die größten Stöße bzw. die größte Amplitude von Stößen im Felgenkörper zu erwarten ist.

Der in Fig. 5 gezeigte Kreisring 550 ist mit beispielhaft dargestellten sechs Piezokeramiken 554 ausgestattet. Etwaige radial auf den Kreisring 550 wirkende Kräfte wirken sich auf zumindest eine der Piezokeramiken 554 aus und können dabei sowohl zu einem entsprechenden Signal führen als auch über eine Ansteuerung der Piezokeramik 554 aktiv bedämpft werden. Durch die Verwendung mehrerer Piezokeramiken 554, die nicht auf die Zahl sechs beschränkt ist, kann lokal gezielt auf Stöße reagiert werden.

Die vorliegende Erfindung schafft somit ein Leichtbaurad für ein Elektrofahrzeug, das mit einem Elektromotor jeweils individuell ausgestattet ist oder sein kann. Gleichzeitig wird über den konstruktiven Aufbau und gegebenenfalls weitere Maßnahmen eine Stoßentkopplung zwischen Fahrstößen und dem jeweiligen Elektromotor erreicht.

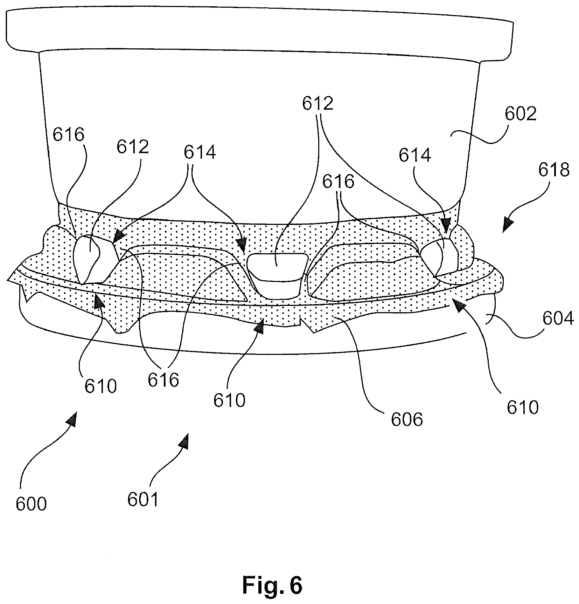

Fig. 6 zeigt eine Form 601 bestehend aus zwei Einzelformen 602 und 604 zum Herstellen eines Radkörpers, Im Verbindungsbereich 618 der beiden Einzelformen 602 und 604 sind erste mit Harz vorgetränkte bzw. imprägnierte Fasermatten 606 eingelegt. In diesem Verbindungsbereich 618 entsteht dabei ein Übergangsbereich wie der in Figur 2 gezeigte Übergangsbereich 240. In den Dämpfungsbereichen 610 des herzustellenden Radkörpers 600 sind Schaumstoffkörper 612, die auch als Schaumkerne bezeichnet werden können, in Hohlräume 614 als Dämpfungsmittel und/oder zum Erhöhen der Biegesteifigkeit eingelegt.

Als nächster Herstellungsschritt wird nun in die neben den Schaumstoffkernen 612 verbliebenen freien Bereiche 616 der Hohlräume 614 Harz eingespritzt, so dass jeder Hohlraum 614 jeweils mit einem Schaumstoffkern 612 und Harz ausgefüllt ist. Anschließend werden weitere Fasermatten aufgelegt, so dass die Schaumstoffkerne 612 eingeschlossen werden.

## Patentansprüche

1. Radkörper (102) eines Rades (100) eines Elektrofahrzeugs umfassend
- einen Felgenkörper (112) mit
- einem Felgenabschnitt (114) zum Aufnehmen eines Reifens, und
- einen Speichenabschnitt (116) zum Tragen des Felgenabschnitts (114) auf einem Lager (108) zum drehbaren Lagern des Felgenkörpers (112) auf einer Radachse (110),
- einen Motoraufnahmekörper (118) zum Aufnehmen eines Elektromotors (104) zum Antreiben des Rades (100), und der Motoraufnahmekörper (118) umfasst
- einen äußeren, radial umlaufenden Aufnahmeabschnitt (120) zum Aufnehmen und Befestigen eines äußeren, zur Radachse drehbaren Teils des Elektromotors (104) und
- einen Übertragungsabschnitt (122) zum Übertragen eines zum Antreiben des Rades (100) auf den Aufnahmeabschnitt (120) wirkenden Drehmomentes auf den Speichenabschnitt (116), wobei der Übertragungsabschnitt (122) in einem Verbindungsbereich (124) mit dem Speichenabschnitt (116) des Felgenkörpers (122) verbunden ist, und dass der Motoraufnahmekörper im Bereich des äußeren Aufnahmeabschnitts zum Speichenabschnitt in axialer Richtung beabstandet, und der Motoraufnahmekörper (118) im Bereich des äußeren Aufnahmeabschnitts (120) zum Felgenabschnitt (114) in radialer Richtung beabstandet ist,
**dadurch gekennzeichnet, dass** der Felgenkörper und der Motoraufnahmekörper im Wesentlichen aus einem Faser-Kunststoff-Verbund hergestellt sind, und
dass eine Verbindung zum Felgenkörper nur in einem inneren Bereich nahe der Radachse über den Verbindungsbereich vom Motoraufnahmekörper zum Felgenkörper vorgesehen ist
wobei in den Radkörper wenigstens ein nachgiebiger Abschnitt, insbesondere elastischer und dämpfender Abschnitte zum Aufnehmen von Stoßbelastungen eingearbeitet ist, wobei der wenigstens eine nachgiebige Abschnitt als aktiver Abschnitt ausgebildet ist.

2. Radkörper nach Anspruch 1,
**dadurch gekennzeichnet, dass** der Felgenkörper und/oder der Motoraufnahmekörper im Wesentlichen aus einem Faser-Kunststoff-Verbund mit hochmoduligen Fasern hergestellt ist.

3. Radkörper nach Anspruch 1 oder 2,
**dadurch gekennzeichnet, dass** der Aufnahmeabschnitt einen größeren Außendurchmesser aufweist als der Verbindungsbereich, insbesondere dass der Außendurchmesser des Aufnahmeabschnitts um wenigstens 30%, vorzugsweise wenigstens 50%, insbesondere wenigstens 80% größer als der Außendurchmesser des Verbindungsbereichs ist.

4. Radkörper nach einem der vorstehenden Ansprüche,
**dadurch gekennzeichnet, dass** der Radkörper so ausgebildet ist, dass ein zum Antreiben des Rades auf den äußeren Aufnahmeabschnitt wirkendes Drehmoment vom äußeren Aufnahmeabschnitt des Motoraufnahmekörpers über den Übertragungsabschnitt des Motoraufnahmekörpers, den Verbindungsbereich und den Tragabschnitt des Felgenkörpers auf den Felgenabschnitt des Felgenkörpers übertragen wird, wobei eine radial auf den Felgenkörper wirkende Kraft über den Speichenabschnitt auf das Lager übertragen wird.

5. Radkörper nach einem der vorstehenden Ansprüche,
**dadurch gekennzeichnet, dass** in dem Felgenkörper in einem Übergangsbereich zwischen Felgenabschnitt und Speichenabschnitt Schaumkörper zum Erhöhen der Stabilität des Radkörpers eingearbeitet sind.

6. Rad mit einem Radkörper nach einem der vorstehenden Ansprüche, umfassend
- eine Radachse,
- ein Radlager zum drehbaren Lagern des Felgenkörpers auf der Radachse,
- einen Elektromotor mit einem rotierenden Teil und einem stehenden Teil, die drehbar zu einander gelagert sind, wobei der stehende Teil fest mit der Radachse verbunden ist und der drehende Teil fest mit dem Aufnahmeabschnitt verbunden ist, so dass der Elektromotor auf den Aufnahmeabschnitt ein Drehmoment zum Antreiben des Rades übertragen kann.

7. Rad nach Anspruch 6,
**dadurch gekennzeichnet, dass** der Elektromotor als Synchronmotor ausgebildet ist und der drehende Teil Permanentmagneten aufweist und/oder dass der drehende Teil ganz oder teilweise in den Motoraufnahmeabschnitt eingearbeitet ist, insbesondere dass die Permanentmagneten in den Motoraufnahmeabschnitt eingearbeitet sind.

8. Elektrofahrzeug mit wenigstens einem, insbesondere 4 Rädern nach einem der Ansprüche 6 oder 7.

## Claims

1. A wheel body (102) of a wheel (100) of an electric vehicle, comprising
- a wheel-rim body (112) with
- a wheel-rim portion (114) for receiving a tyre, and comprising
- a spoke portion (116) for bearing the wheel-rim portion (114) on a bearing (108) for rotatable mounting of the wheel-rim body (112) on a wheel axle (110),
- a motor receiving body (118) to receive an electric motor (104) for driving the wheel (100), and the motor receiving body (118) comprises
- an outer, radially-encircling receiving portion (120) for receiving and securing an outer part of the electric motor (104), which part is rotatable with respect to the wheel axle, and
- a transmission portion (122) for transmitting to the spoke portion (116) a torque, acting upon the receiving portion (120), to drive the wheel (100),
wherein in a connection region (124), the transmission portion (122) is connected to the spoke portion (116) of the wheel-rim body (122 [sic]), and in that the motor receiving body is at a distance from the spoke portion in an axial direction in the region of the outer receiving portion, and the motor receiving body (118) is at a distance from the wheel-rim portion (114) in a radial direction in the region of the outer receiving portion (120),
**characterised in that** the wheel-rim body and the motor receiving body are substantially manufactured from a fibre-plastics material compound, and
**in that** a connection to the wheel-rim body is provided only in an inner region close to the wheel axle via the connection region from the motor receiving body to the wheel-rim body,
wherein in the wheel body there is incorporated at least one yielding portion, in particular elastic and damping portions to absorb impact loads, wherein the at least one yielding portion is in the form of an active portion.

2. A wheel body according to claim 1, **characterised in that** the wheel-rim body and/or the motor receiving body is/are substantially manufactured from a fibre-plastics material compound with high modulus fibres.

3. A wheel body according to claim 1 or 2, **characterised in that** the receiving portion has a larger external diameter than the connection region, in particular **in that** the external diameter of the receiving portion is larger by at least 30%, preferably at least 50%, in particular at least 80%, than the external diameter of the connection region.

4. A wheel body according to any one of the preceding claims, **characterised in that** the wheel body is designed such that a torque acting upon the outer receiving portion in order to drive the wheel is transmitted to the wheel-rim portion of the wheel-rim body from the outer receiving portion of the motor receiving body via the transmitting portion of the motor receiving body, the connection region and the bearing portion of the wheel-rim body, wherein a force acting radially upon the wheel-rim body is transmitted to the bearing via the spoke portion.

5. A wheel body according to any one of the preceding claims, **characterised in that** foam bodies for increasing the stability of the wheel body are incorporated in the wheel-rim body, in a transition region between wheel-rim portion and spoke portion.

6. A wheel with a wheel body according to any one of the preceding claims, comprising
- a wheel axle,
- a wheel bearing for rotatable mounting of the wheel-rim body on the wheel axle,
- an electric motor having a rotating part and a stationary part, rotatably mounted in relation to one another, wherein the stationary part is securely connected to the wheel axle and the rotating part is securely connected to the receiving portion, so that a torque for driving the wheel can be transmitted to the receiving portion by the electric motor.

7. A wheel according to claim 6,
**characterised in that** the electric motor is in the form of a synchronous motor and the rotating part has permanent magnets and/or **in that** the rotating part is totally or partially incorporated in the motor receiving portion, in particular **in that** the permanent magnets are incorporated in the motor receiving portion.

8. An electric vehicle having at least one, in particular 4, wheels according to one of claims 6 and 7.

## Revendications

1. Corps de roue (102) d'une roue (100) d'un véhicule électrique comprenant
- un corps de jante (112) pourvu
- d'une section de jante (114) servant à recevoir un pneu, et
- une section de rayon (116) servant à supporter la section de jante (114) sur un palier (108) servant à monter, de manière à pouvoir tourner, le corps de jante (112) sur un essieu de roue (110),
- un corps de logement de moteur (118) servant à loger un moteur électrique (104) servant à entraîner la roue (100), lequel corps de logement de moteur (118) comprend
- une section de logement (120) extérieure, radialement périphérique, servant à recevoir et à fixer une partie extérieure pouvant tourner par rapport à l'essieu de roue du moteur électrique (104) et
- une section de transfert (122) servant à transférer sur la section de rayon (116) un couple de rotation agissant sur la section de logement (120) aux fins de l'entraînement de la roue (100),
dans lequel la section de transfert (122) est reliée, dans une zone de liaison (124), à la section de rayon (116) du corps de jante (122), et le corps de logement de moteur est tenu à distance dans une direction axiale dans la zone de la section de logement extérieure par rapport à la section de rayon, et
le corps de logement de moteur (118) est tenu à distance dans une direction radiale dans la zone de la section de logement (120) extérieure par rapport à la section de jante (114),
**caractérisé en ce que** le corps de jante et le corps de logement de moteur sont fabriqués sensiblement à partir d'un composite de fibres et de matière plastique, et
qu'une liaison avec le corps de jante n'est prévue que dans une zone intérieure à proximité de l'essieu de roue par l'intermédiaire de la zone de liaison du corps de logement de moteur vers le corps de jante,
dans lequel au moins une section souple, en particulier des sections élastiques et amortissantes servant à recevoir des contraintes de chocs sont intégrées dans le corps de roue, dans lequel l'au moins une section souple est réalisée sous la forme d'une section active.

2. Corps de roue selon la revendication 1,
**caractérisé en ce que** le corps de jante et/ou le corps de logement de moteur sont fabriqués sensiblement à partir d'un composite de fibres et de matière plastique comprenant des fibres à module d'élasticité élevé.

3. Corps de roue selon la revendication 1 ou 2,
**caractérisé en ce que** la section de logement présente un diamètre extérieur plus grand que la zone de liaison, en particulier **en ce que** le diamètre extérieur de la section de logement est plus grand d'au moins 30 %, de préférence d'au moins 50 %, en particulier d'au moins 80 % que le diamètre extérieur de la zone de liaison.

4. Corps de roue selon l'une quelconque des revendications précédentes,
**caractérisé en ce que** le corps de roue est réalisé de sorte qu'un couple de rotation, agissant sur la section de logement extérieure afin d'entraîner la roue, est transmis depuis la section de logement extérieure du corps de logement de moteur sur la section de jante du corps de jante en passant par la section de transfert du corps de logement de moteur, la zone de liaison et la section de support du corps de jante, dans lequel une force agissant radialement sur le corps de jante est transférée sur le palier par l'intermédiaire de la section de rayon.

5. Corps de roue selon l'une quelconque des revendications précédentes,
**caractérisé en ce que** des corps en mousse servant à élever la stabilité du corps de roue sont intégrés dans le corps de jante dans une zone de transition entre la section de jante et la section de rayon.

6. Roue comprenant un corps de roue selon l'une quelconque des revendications précédentes, comprenant
- un essieu de roue,
- un palier de roue servant à monter de manière à pouvoir tourner le corps de jante sur l'essieu de roue,
- un moteur électrique pourvu d'une partie rotative et d'une partie immobile, qui sont montées l'une par rapport à l'autre de manière à pouvoir tourner, dans lequel la partie immobile est reliée de manière solidaire à l'essieu de roue et la partie rotative est reliée de manière solidaire à la section de logement de sorte que le moteur électrique peut transférer, sur la section de logement, un couple de rotation servant à entraîner la roue.

7. Roue selon la revendication 6,
**caractérisée en ce que** le moteur électrique est réalisé sous la forme d'un moteur synchrone, et la partie rotative présente des aimants permanents, et/ou que la partie rotative est intégrée en totalité ou en partie dans la section de logement de moteur, en particulier que les aimants permanents sont intégrés dans la section de logement de moteur.

8. Véhicule électrique comprenant au moins une, en particulier 4 roues selon l'une quelconque des revendications 6 ou 7.
